(19) Europäisches Patentamt
European Patent Office
Office européen des brevets

(11) EP 1 120 442 B1

(12) **EUROPÄISCHE PATENTSCHRIFT**

(45) Veröffentlichungstag und Bekanntmachung des Hinweises auf die Patenterteilung:
**15.09.2004 Patentblatt 2004/38**

(51) Int Cl.⁷: **C08K 5/5398**, C08K 5/17, C08K 5/47, C08L 21/00

(21) Anmeldenummer: **01100179.9**

(22) Anmeldetag: **17.01.2001**

(54) **Vulkanisierbare Kautschukmischungen**

Vulcanizable rubber compositions

Compositions vulcanisables de caoutchouc

(84) Benannte Vertragsstaaten:
**DE FR GB IT**

(30) Priorität: **28.01.2000 DE 10003742**

(43) Veröffentlichungstag der Anmeldung:
**01.08.2001 Patentblatt 2001/31**

(73) Patentinhaber: **Rhein Chemie Rheinau GmbH
68219 Mannheim (DE)**

(72) Erfinder:
- **Früh, Thomas Dr.
67061 Ludwigshafen (DE)**
- **Heiliger, Ludger Dr.
67433 Neustadt (DE)**
- **Kleiner, Thomas Dr.
51519 Odenthal (DE)**
- **Weidenhaupt, Hermann-Josef Dr.
50259 Pulheim (DE)**
- **Schuster, Robert-Hans Prof. Dr.
30519 Hannover (DE)**
- **Kiesekamp, Joachim
06108 Halle/Saale (DE)**

(74) Vertreter: **Roos, Peter et al
Gille Hrabal Struck
Neidlein Prop Roos
Brucknerstrasse 20
D-40593 Düsseldorf (DE)**

(56) Entgegenhaltungen:
**EP-A- 0 767 205**
**EP-A- 0 945 482**
**GB-A- 1 342 889**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 120 442 B1

**Beschreibung**

Die vorliegende Erfindung betrifft vulkanisierbare Kautschukmischungen, die ohne Freisetzung von Nitrosaminen mit einer hohen Vernetzungsdichte und einem hohen Anteil an kurzen Schwefelbrücken vulkanisiert werden können.

Es ist Stand der Technik Kautschukvulkanisate mit hohem Vernetzungsgrad herzustellen, indem man die entsprechenden Kautschuke in Gegenwart von Schwefel in Kombination mit bekannten Vulkanisationsbeschleunigern, wie Sulfenamiden, Thiuramen oder Carbamaten, vulkanisiert. Nachteilig bei Verwendung solcher Vulkanisationssysteme ist jedoch, um eine hohe Vernetzungsdichte bei den Vulkanisaten zu erreichen, dass relativ große Mengen an Vernetzungschemikalien benötigt werden. Darüber hinaus ist es nachteilig, dass der Anteil an langkettigen Schwefelbrücken im Vulkanisat relativ hoch ist, was bedeutet, dass die Temperaturbeständigkeit der Vulkanisate nicht befriedigend ist. In diesem Zusammenhang verweisen wir z.B. auf M.R. Kreijsa, J.L. Koenig, "The Nature of Sulfur Vucanisation" in Elastomer Technology Handbook, ed. by N.P. Cheremisinoff, S. 475 ff, CRC Press Inc., Boca Raton 1993; A.D. Thorn, R.A. Robinson, "Compound Design" in Rubber Products Manufactoring Technology, ed. by A.K. Bhowmick, M.M. Hall, H.A. Benarey, S. 1 ff, Marcel Dekker Inc., New York 1994 und A.K. Bhowmick, D. Mangaraj, "Vulcanization and Curing Techniques" in Rubber Products Manufactoring Technology, ed. by A.K. Bhowmick, M.M. Hall, H.A. Benarey, S. 315 ff, Marcel Dekker Inc., New York 1994.

Ziel der vorliegenden Erfindung war es nun, vulkanisierbare Kautschukmischungen zur Verfügung zu stellen, die Vulkanisate ergeben, die eine hohe Vernetzungsdichte sowie einen hohen Anteil an kurzkettigen Schwefelbrücken aufweisen. Darüber hinaus war es Ziel der vorliegenden Erfindung die Vulkanisation mit Vulkanisationschemikalien auszuführen, die keine Nitrosamine freisetzen und damit ökologisch unbedenklich sind. Weiterhin war es Ziel der vorliegenden Erfindung, eine hohe Vernetzungsdichte der Vulkanisate zu erreichen mit möglichst geringen molaren Dosierungen an Vernetzungschemikalien.

Gegenstand der vorliegenden Erfindung sind daher vulkanisierbare Kautschukmischungen enthaltend

a) Kautschuke,

b) O,O-Bis-(alkyl)dithiophosphorsäurepolysulfide der Formel

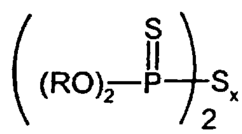
,

worin

x für 2, 3, 4 und 5 steht und

R einen $C_8$-$C_{12}$-Alkyl- oder -Cycloalkylrest bedeutet

und

c) primäre und/oder sekundäre Amine der Formel

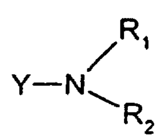
,

worin

Y für Wasserstoff oder einen Mercaptobenzothiazolrest steht,

$R_1$ Wasserstoff, $C_1$-$C_6$-Alkyl, $C_5$ und $C_6$-Cycloalkyl sowie $C_7$-$C_{12}$-Aralkyl bedeutet und

$R_2$ die Bedeutung von $R_1$ besitzt,

mit der Maßgabe, dass $R_1$ und $R_2$ nicht gleichzeitig Wasserstoff bedeuten,
wobei die Komponenten b) und c) im Molverhältnis von 0,5 bis 1,5:1 vorliegen und insgesamt Mengen von 1,0 bis 10 Gew.-Teile pro 100 Gew.-Teile Kautschuke in den Kautschukmassen vorhanden sind, und

d) 0,5 bis 3,0 gew.-% Schwefel, bezogen auf Kautschuke

Bevorzugt ist ein Molverhältnis der Komponenten b) und c) von 0,9 bis 1,1:1, sowie insgesamt Mengen von 1,0 bis 7 Gew.-Teile pro 100 Gew.-Teile Kautschuke in den Kautschukmassen.

Die erfindungsgemäß einsetzbaren Kautschuke a) können Doppelbindungen entsprechend Jodzahlen von mindestens 2, vorzugsweise 5 bis 470, enthalten. Die Bestimmung der Jodzahlen erfolgt im allgemeinen nach Addition von Jodchlorid in Essigsäure nach Wijs (DIN 53241, Teil 1). Die Jodzahl definiert die Jodmenge in g, die von 100 g Substanz chemisch gebunden wird.

Die Kautschuke besitzen in der Regel Mooney-Viskositäten ML 1-4/100°C (DIN 53523) von 10-150, vorzugsweise 20-120.

Als Kautschuke können sowohl Naturkautschuk als auch Synthesekautschuke eingesetzt werden. Bevorzugte Synthesekautschuke sind beispielsweise bei I. Franta (Elastomers and Rubber Compounding Materials, Elsevier, New York 1989) oder auch in Ullmanns Enzyklopädie of Industrial Volume A 23, VCH-Verlag, Weinheim 1993 beschrieben.

Sie umfassen u.a.

| | |
|---|---|
| BR = | Polybutadien, |
| ABR = | Butadien/Acrylsäure-$C_1$-$C_4$-alkylestercopolymere, |
| IR = | Polyisopren, |
| NR = | Naturkautschuk, |
| SBR = | Styrol-Butadien-Copolymerisate mit Styrolgehalten von 1-60, vorzugsweise 2-50 Gewichtsprozent, |
| XSBR = | Styrol-Butadien-Copolymerisate und Pfropfpolymerisate mit weiteren ungesättigten polaren Monomeren wie Acrylsäure, Methacrylsäure, Acrylamid, Methacrylamid, N-Methoxymethyl-methacrylsäureamid, N-Acetoxymethylmethacrylsäureamid, Acrylnitril, Hydroxyethylacrylat und/oder Hydroxyethylmethacrylat mit Styrolgehalten von 2-50 Gewichtsprozent und Gehalten an einpolymerisierten polaren Monomeren von 1-20 Gewichtsprozent, |
| IIR = | Isobutylen/Isopren-Copolymerisate mit Isoprengehalten von 0,5-10 Gewichtsprozent, |
| BRIIR-bromierte = | Isobutylen/Isopren-Copolymerisate mit Bromgehalten von 0,1-10 Gewichtsprozenten, |
| CL/IIR = | chlorierte Isobutylen/Isopren-Copolymerisate mit Bromgehalten von 0,1-10 Gewichtsprozenten, |
| NBR = | Polybutadien-Acrylnitril-Copolymerisate mit Acrylnitrilgehalten von 5-60, vorzugsweise 10-50 Gewichtsprozenten, |
| HNBR = | teilhydrierter NBR-Kautschuk, in dem bis zu 98,5 % der Doppelbindungen hydriert sind, |
| XHNBR = | vollhydrierter NBR-Kautschuk, in dem bis zu 100 % der Doppelbindungen hydriert sind, |
| EPDM = | Ethylen-Propylen-Dien-Copolymerisate, |
| FKM = | Fluorkautschuk, |
| CR = | Chloroprenkautschuke, |
| CM = | chloriertes Polyethylen, |
| CSM = | chlorsulfoniertes Polyethylen, |
| ACSM = | chlorsulfoniertes Polyethylen/Polypropylen, |
| ECO = | Epichlorhydrinkautschuk, |
| ACM = | Acrylatkautschuk, |
| EAM = | Vamac® = Copolymere aus Ethylen, Methylacrylat und einer dritten carboxylgruppen-haltigen Komponente (Fa. DuPont) |
| ECO = | Epichlorhydrinkautschuk, |
| Q = | Silikonkautschuke, |
| AU = | Polyesterurethanpolymerisate, |
| EU = | Polyetherurethanpolymerisate |

sowie Mischungen dieser Kautschuke.

Als Komponente b) werden bei den erfindungsgemäßen Kautschukmassen insbesondere solche eingesetzt,

in denen x für die Zahlen 3, 4 und 5 steht, und R für einen Alkyl- oder Cycloalkylrest mit 8 Kohlenstoffatomen steht. Insbesondere wird als Komponente b) eingesetzt: O,O-Bis(2-ethylhexyl)dithio-phosphorsäurepolysulfid der nachstehenden Formel:

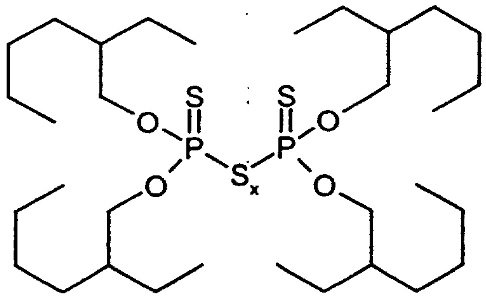

, x = 2 - 5.

Als primäre und sekundäre Amine werden bevorzugt solche der oben genannten Formel eingesetzt (Komponente c), worin Y für Wasserstoff oder einen Mercaptobenzothiazolylrest steht und $R_1$ und $R_2$ die Bedeutung von $C_5$- oder $C_6$-Cycloalkyl besitzen. Insbesondere werden als primäre und/oder sekundäre Amine Cyclohexylamin, Dicyclohexylamin, CBS (N-Cyclohexyl-2-benzothiazolsulfenamid), TBBS (N-tert.-Butyl-2-benzothiazolsufenamid) und DCBS (N,N-Dicyclohexyl-2-benzothiazolsulfenamid) eingesetzt.

Selbstverständlich ist es bei den erfindungsgemäßen Kautschukmassen möglich, die Komponenten a), b) und c) sowohl einzeln als auch im Gemisch untereinander einzusetzen. Um das günstigste Mischungsverhältnis zu bestimmen, können entsprechende Vorversuche durchgeführt werden, wobei sich das Mischungsverhältnis insbesondere nach dem späteren Verwendungszweck der Kautschukvulkanisate richtet.

Die erfindungsgemäßen vulkanisierbaren Kautschukmassen werden üblicherweise hergestellt, indem man die entsprechende Kautschuke mit den zuvor beschriebenen Komponenten b) und c) in geeigneten Mischapparaturen, wie Innenmischern, Walzen oder Extrudern, in den angegebenen Mengen vermischt.

Zur Herstellung entsprechender Vulkanisate werden die erfindungsgemäßen Kautschukmassen in Gegenwart von Schwefel, in üblicher Weise vulkanisiert. Die Menge an Schwefel, die den zu vulkanisierenden Kautschukmassen zugesetzt wird, beträgt ca. 0,5 bis 3,0 Gew.-%, bezogen auf den Kautschuk.

Selbstverständlich können den erfindungsgemäßen Kautschukmassen noch weitere Kautschukchemikalien der bekannten Art bzw. Kautschukhilfsmittel zugegeben werden, wie sie beispielsweise in Khairi Nagdi: "Gummiwerkstoffe", Ein Ratgeber für Anwender, Vogel-Verlag, Würzburg 1981, beschrieben sind. Diese Zusätze werden in den bekannten Mengen zugesetzt, und richten sich nach dem jeweiligen Einsatzzweck der Kautschukvulkanisate.

Ein weiterer Gegenstand der vorliegenden Erfindung ist die Verwendung der erfindungsgemäßen Kautschukmischungen zur Herstellung von Gummiformteilen aller Art, insbesondere zur Herstellung von Reifen, Schläuchen, Dämpfungselementen, Dichtungen und Profilen.

Es ist überraschend, dass mit dem zuvor beschriebenen erfindungsgemäßen Kautschukmischungen Kautschukvulkanisate hergestellt werden können, die eine hohe Vernetzungsdichte aufweisen, verbunden mit einem hohen Anteil an kurzkettigen Schwefelbrücken, wobei die molare Einsatzmenge an Vulkanisationsmitteln (Vernetzungsmittel) im Vergleich zum Stand der Technik gering gehalten werden kann.

## Beispiele

Die untersuchten Testmischungen auf Basis von NR (Crepe 1) sind ungefüllt und enthalten keine Weichmacher oder Alterungsschutzmittel:

| Mischungsbestandteil | Menge [phr] |
|---|---|
| NR (Crepe 1) | 100 |
| ZnO | 2,5 |
| Sterarinsäure | 1,0 |
| Schwefel | 1,7 |
| Beschleuniger | $\frac{\text{Molare Menge an Schwefel in Beschleinigerchemikalien}}{\text{Molare Menge an elementarem Schwefel}} = 0{,}18$ |

Für das O,O-Bis(alkyl)dithiophosphorsäurepolysulfid wurde die Menge an freiem Schwefel auf 1,4 phr reduziert, um im Vergleich zu den weiteren Beschleunigern die Gesamtkonzentration an Schwefel gemäß der Rezeptur auf 1,7 phr einzustellen. Aus Gründen der Übersichtlichkeit ist in den Beispielen der Name O,O-Bis(alkyl)dithiophosphorsäurepolysulfid durch SDiOP ersetzt worden. Aus den gleichen Gründen werden Cyclohexylamin als CHA und Dicyclohexylamin als DCHA abgekürzt.

**Beispiel 1**

Rheometer-Experimente der Vulkanisationsberschleuniger einzeln und kombiniert bei 150°C

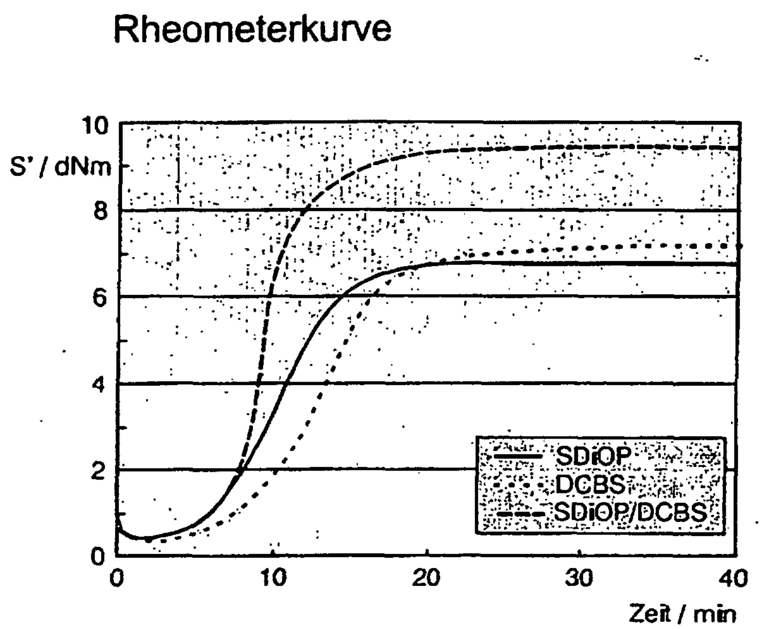


| Rheometerverhalten: | |
|---|---|
| Beschleuniger: | $S'_{max}$-$S'_{min}$ [dNm] |
| SDiOP | 6,4 |
| DCBS | 6,9 |
| SDiOP + DCBS | 9,0 |

| Kinetik: | | | |
|---|---|---|---|
| Beschleuniger | $t_i$ [min] | $k_1$ [$min^{-1}$] | $E_a$ [kJ/mol] |
| SDiOP | 7,0 | 0,22 | 107 |
| DCBS | 9,4 | 0,25 | 93 |
| SDiOP + DCBS | 8,3 | 0,68 | 91 |

Die Ermittlung des Rheometerverhaltens (Rheometerkurven, Rheometerdaten und Kinetik) erfolgt nach DIN 53529. Das verwendete Gerät ist ein RPA 2000 von Apha Technologies. Die Ermittlung der Kinetikdaten $k_1$, $t_i$ ergeben sich aus formalkinetischer Auswertung nach 1. Ordnung im Intervall $t_{25}$ bis $t_{65}$. Ea folgt aus der Regression über die k-Werte bei 130, 140, 150, 160 und 170°C.

Aus den Tabellenwerten folgt, dass die erfindungsgemässe Kombination eine deutlich erhöhte Drehmomentdifferenz ($S'_{max}$-$S'_{min}$) aufweist, dass gleichzeitig die Aktivierungsenergie $E_a$ abgesenkt und die Reaktionsgeschwindigkeitskonstanten reduziert wurde, während die Induktionszeit zwischen den beiden Einzelkomponenten liegt.

**Beispiel 2:**

Bestimmung der Vernetzungseffizienz und Vernetzungsdichte der Vulkanisationsbeschleuniger einzeln und kombiniert bei 150°C

Netzknotenstruktur, Vernetzungsdichte:

| Netzknotenstruktur, Vernetzungsdichte: | | | | | |
|---|---|---|---|---|---|
| Beschleuniger | $S_1$ [%] | $S_2$ [%] | $S_X$ [%] | Effizienz $\delta ve/\delta c$ (S) | Dichte $ve \cdot 10^5$ / mol · $cm^{-3}$ |
| SDiOP | 64 | 24 | 12 | 0,21 | 11,5 |
| DCBS | 0 | 40 | 60 | 0,28 | 12,6 |
| SDiOP + DCBS | 72 | 15 | 13 | 0,32 | 17,5 |

Die Ermittlung der Netzbogendichte erfolgt nach P. J. Flory, J. Rehner, jr., J. Chem. Soc. 521 (1943). Die Ermittlung der Netzknotenstruktur erfolgt nach B. Saville, A. A. Watson, Rubber Chem. Technol. 100 (1967). $S_1$ = monosulfidische Verknüpfung, $S_2$ = disulfidische Verknüpfung, $S_X$ = polysulfidische Verknüpfung.

Aus den Werten folgt, dass die vernetzungseffizienz $\delta ve/\delta c$ überraschend hoch liegt und gleichzeitig der Anteil kurzer/monosulfidischer Schwefelbrücken sehr hoch ist. Zusätzlich ist die erreichbare Vernetzungsdichte in der erfindungsgemässen Chemikalienkombination überproportional erhöht.

**Beispiel 3:**

Rheometer-Experimente des SDiOP einzeln und kombiniert mit äquimolaren Mengen an CHA und DCHA bei 150°C.

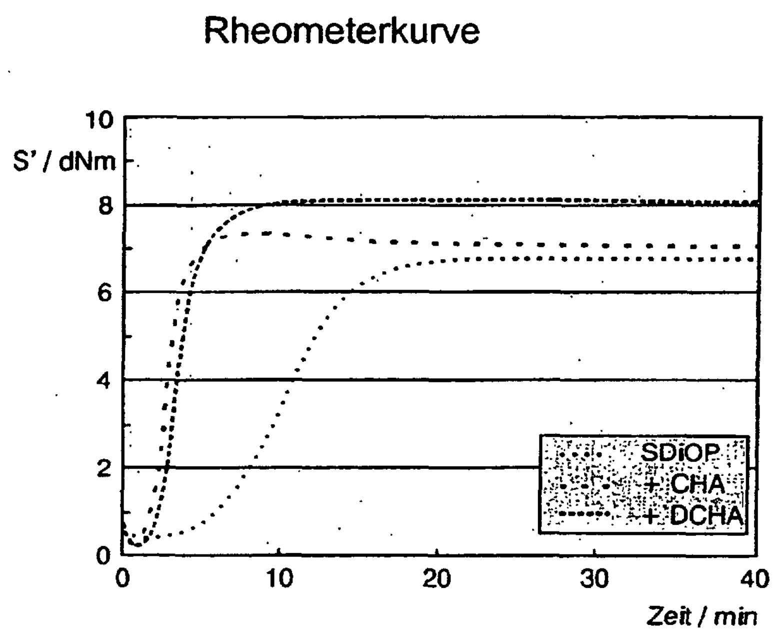


| Rheometerverhalten: | |
|---|---|
| Beschleuniger: | $S'_{max}$-$S'_{min}$ [dNm] |
| SDiOP | 6,4 |
| SDiOP + CHA | 7,0 |

(fortgesetzt)

| Rheometerverhalten: | |
|---|---|
| Beschleuniger: | $S'_{max}$-$S'_{min}$ [dNm] |
| SDiOP + DCHA | 7,8 |

| Kinetic: | | | |
|---|---|---|---|
| Beschleuniger | $t_i$ [min] | $k_1$ [$min^{-1}$] | $E_a$ [kJ/mol] |
| SDiOP | 7,0 | 0,22 | 107 |
| SDiOP + CHA | 2,0 | 0,86 | 98 |
| SDiOP + DCHA | 2,2 | 0,57 | 115 |

Aus den Tabellenwerten folgt, dass durch den Einsatz der erfindungsgemässen Amine eine überraschende Aktivierung der Vernetzungsreaktion erreicht wird. Dies ist kenntlich an der größeren Drehmomentdifferenz $S'_{max}$-$S'_{min}$, den verkürzten Induktionszeiten $t_i$ und an den sehr stark erhöhten Reaktionsgeschwindigkeitskonstanten $k_1$.

**Beispiel 4:**

Bestimmung der Vernetzungsdichte des SDiOP einzeln und kombiniert mit äquimolaren Mengen an CHA und DCHA bei 150°C

Netzknotenstruktur, Vernetzungsdichte:

| Netzknotenstruktur, Vernetzungsdichte: | | | | |
|---|---|---|---|---|
| Beschleuniger | $S_1$ [%] | $S_2$ [%] | $S_X$ [%] | Dichte ve · $10^5$ / mol · $cm^{-3}$ |
| SDiOP | 68 | 21 | 11 | 12 |
| SDiOP + CHA | 48 | 21 | 31 | 13 |
| SDiOP + DCHA | 73 | 16 | 11 | 16,3 |

Aus den Tabellenwerten folgt, dass die Gesamtvernetzungsdichte insgesamt erhöht wird und dass insbesondere bei Einsatz von SDiOP in Kombination mit DCHA der Anteil der monosulfidischen Netzknoten sehr stark erhöht wird.

## Patentansprüche

**1.** Vulkanisierbare Kautschukmischungen enthaltend

a) Kautschuke,

b) O,O-Bis-(alkyl)dithiophosphorsäurepolysulfide der Formel

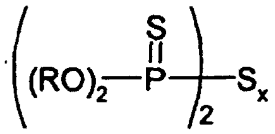

worin

x für 2, 3, 4 und 5 steht und
R einen $C_8$-$C_{12}$-Alkyl- oder -Cycloalkylrest bedeutet

c) primäre und/oder sekundäre Amine der Formel

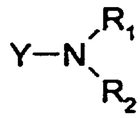

worin

Y für Wasserstoff oder einen Mercaptobenzothiazolrest steht,
$R_1$ Wasserstoff, $C_1$-$C_6$-Alkyl, $C_5$ und $C_6$-Cycloalkyl sowie $C_7$-$C_{12}$-Aralkyl bedeutet und
$R_2$ die Bedeutung von $R_1$ besitzt, mit der Maßgabe, dass $R_1$ und $R_2$ nicht gleichzeitig Wasserstoff bedeuten,

wobei die Komponenten b) und c) im Moiverhältnis von 0,5 bis 1,5:1 untereinander vorliegen und insgesamt in Mengen von 1 bis 10 Gew.-Teile pro 100 Gew.-Teile Kautschuke in den Kautschukmassen vorhanden sind. und

d) 0,5 bis 3,0 Gew.-% Schwefel, bezogen auf den Kautschuk.

**2.** Vulkanisierbare Kautschukmischungen nach Anspruch 1, worin die Komponente c) ausgewählt wird aus Cyclohexylamin, Dicyclohexylamin und N,N-Dicyclohexyl-2-benzothiazolsulfenamid.

**3.** Vulkanisierbare Kautschukmischungen nach Anspruch 1, worin die Komponente b) eine Verbindung der Formel

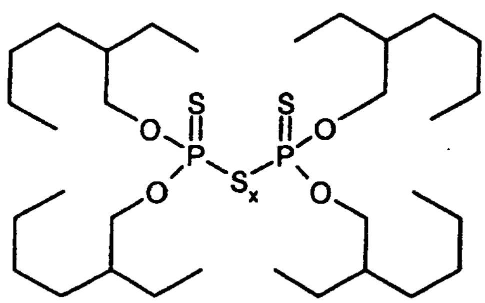

ist, worin x = 2 - 5 ist.

**4.** Vulkanisierte Kautschukmischungen, erhalten durch Vulkanisation der vulkanisierbaren Kautschukmischungen nach einem der Ansprüche 1 bis 3.

**5.** Gummiformteile, erhalten durch Vulkanisation der vulkanisierbaren Kautschukmischungen nach einem der Ansprüche 1 bis 3.

**6.** Gummiformteile nach Anspruch 5, bei denen es sich um Reifen, Schläuche, Dämpfungselemente, Dichtungen und Profile handelt.

**7.** Verwendung der vulkanisierbaren Kautschukmassen nach einem der Ansprüche 1 bis 3 zur Herstellung von Gummiformteilen, insbesondere zur Herstellung von Reifen, Schläuchen, Dämpfungselementen, Dichtungen und Profilen.

**8.** Verfahren zur Herstellung von Gummiformteilen durch Vulkanisation der vulkanisierbaren Kautschukmischungen

nach einem der Ansprüche 1 bis 3.

**9.** Verwendung von b), O,O-Bis-(alkyl)dithiophosphorsäurepolysulfiden, der Formel

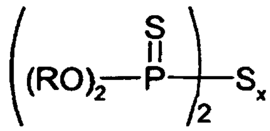

worin

x für 2, 3, 4 und 5 steht und
R einen $C_8$-$C_{12}$-Alkyl- oder -Cycloalkylrest bedeutet,

und

c), primären und/oder sekundären Aminen der Formel

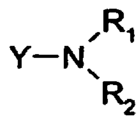

worin

Y für Wasserstoff oder einen Mercaptobenzothiazolrest steht,
$R_1$ Wasserstoff, $C_1$-$C_6$-Alkyl, $C_5$ und $C_6$-Cycloalkyl sowie $C_7$-$C_{12}$-Aralkyl bedeutet und
$R_2$ die Bedeutung von $R_1$ besitzt, mit der Maßgabe, dass $R_1$ und $R_2$ nicht gleichzeitig Wasserstoff bedeuten,

zur Erhöhung der Vernetzungsdichte gegenüber der alleinigen Verwendung der Komponenten b) und c) bei der Vulkanisation von vulkanisierbaren Kautschukmischungen, die a) Kautschuke und d) 0,5 bis 3,0 Gew.-% Schwefel, bezogen auf den Kautschuk enthalten,
worin die Komponenten b) und c) im Molverhältnis von 0,5 bis 1,5:1 untereinander vorliegen und insgesamt in Mengen von 1 bis 10 Gew.-Teile pro 100 Gew.-Teile Kautschuke in den vulkanisierbaren Kautschukmischungen vorhanden sind.

## Claims

**1.** Vulcanisable rubber mixtures comprising:

a) rubbers,

b) O,O-bis-(alkyl)dithiophosphoric acid polysulphides corresponding to the formula

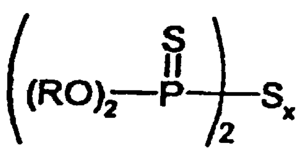

wherein

x represents 2, 3, 4 or 5 and
R represents a $C_8$-$C_{12}$-alkyl or -cycloalkyl radical
and

c) primary and/or secondary amines corresponding to the formula

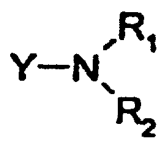

wherein

Y represents hydrogen or a mercaptobenzothiazole radical,
$R_1$ represents hydrogen, $C_1$-$C_6$-alkyl, $C_5$ and $C_6$-cycloalkyl and $C_7$-$C_{12}$-aralkyl, and
$R_2$ has the meaning of $R_1$, with the proviso that $R_1$ and $R_2$ do not simultaneously represent hydrogen,

wherein the components b) and c) are in a molar ratio of 0.5 to 1.5:1 and are present in a total amount of 1 to 10 parts by weight per 100 parts by weight of rubbers in the rubber compounds, and

d) 0.5 to 3.0 % by weight sulphur, based on the rubber.

**2.** Vulcanisable rubber mixtures according to claim 1, wherein component c) is selected from cyclohexylamine, dicyclohexylamine and N,N-dicyclohexyl-2-benzothiazolesulphenamide.

**3.** Vulcanisable rubber mixtures according to claim 1, wherein component b) is a compound of formula

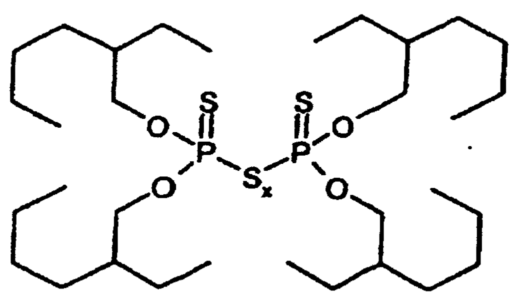

wherein x = 2 - 5.

**4.** Vulcanised rubber mixtures obtained by vulcanisation of the vulcanisable rubber mixtures according to any one of claims 1 to 3.

**5.** Rubber moulded articles obtained by vulcanisation of the vulcanisable rubber mixtures according to any one of claims 1 to 3.

**6.** Rubber moulded articles according to claim 5, wherein the articles are tyres, hoses, damping components, seals and profiles.

**7.** Use of the vulcanisable rubber compounds according to any one of claims 1 to 3 for producing rubber moulded articles, in particular for producing tyres, hoses, damping components, seals and profiles.

**8.** Method for producing rubber moulded articles by vulcanisation of the vulcanisable rubber mixtures according to

any one of claims 1 to 3.

**9.** Use of b) O,O-bis-(alkyl)dithiophosphoric acid polysulphides of formula

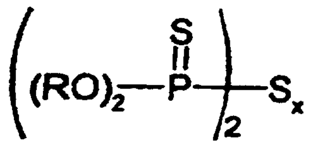

wherein
x represents 2, 3, 4 and 5 and
R represents a $C_8$-$C_{12}$ alkyl or cycloalkyl radical,
and

c) primary and/or secondary amines corresponding to the formula

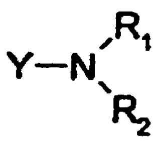

wherein

- Y represents hydrogen or a mercaptobenzothiazole radical,
- $R_1$ represents hydrogen, $C_1$-$C_6$-alkyl, $C_5$ and $C_6$-cycloalkyl and $C_7$-$C_{12}$-aralkyl, and
- $R_2$ has the meaning of $R_1$, with the proviso that $R_1$ and $R_2$ do not simultaneously represent hydrogen,

for increasing the crosslinking density in comparison with the sole use of components b) and c) during vulcanisation of vulcanisable rubber mixtures containing a) rubbers and d) 0.5 to 3.0 % by weight sulphur, based on the rubber, wherein the components b) and c) are in a molar ratio of 0.5 to 1.5:1 and are present in a total amount of 1 to 10 parts by weight per 100 parts by weight of rubbers in the vulcanisable rubber mixtures

## Revendications

**1.** Mélanges de caoutchoucs vulcanisables contenant

a) des caoutchoucs,
b) des polysulfures d'acide O,O-bis-(alkyl)dithiophosphorique, de formule

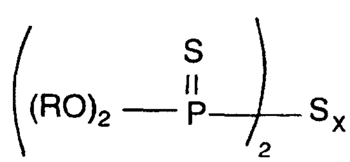

où
x représente 2, 3, 4 et 5 et
R représente un groupement $C_8$-$C_{12}$-alkyle ou -cycloalkyle
c) des amines primaires et/ou secondaires de formule

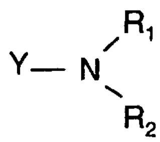

où

Y représente l'hydrogène ou un groupement mercaptobenzothiazole,
$R_1$ représente l'hydrogène, $C_1$-$C_6$-alkyle, $C_5$ et $C_6$-cycloalkyle ainsi que $C_7$-$C_{12}$-aralkyle et
$R_2$ possède la signification de $R_1$, avec la condition que $R_1$ et $R_2$ ne représentent pas simultanément l'hydrogène,

où les composants b) et c) sont présents dans le rapport molaire mutuel de 0,5 à 1,5:1 et sont disponibles dans les masses de caoutchoucs au total en des quantités de 1 à 10 parties en masse pour 100 parties en masse de caoutchoucs,
et
d) 0,5 à 3,0 % en masse de soufre, par rapport au caoutchouc.

**2.** Mélanges de caoutchoucs vulcanisables selon la revendication 1 où le composant c) est choisi parmi la cyclohexylamine, la dicyclohexylamine et le N,N-dicyclohexyl-2-benzothiazolesulfénamide.

**3.** Mélanges de caoutchoucs vulcanisables selon la revendication 1 où le composant b) est un composé de formule

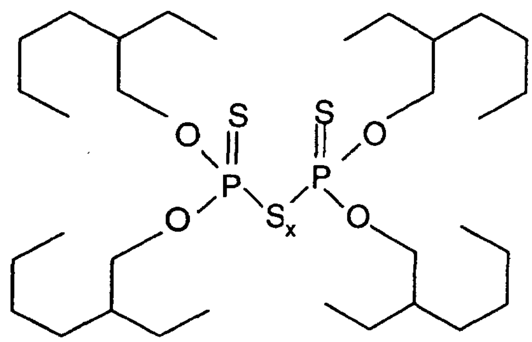

où x = 2 - 5.

**4.** Mélanges de caoutchoucs vulcanisés obtenus par vulcanisation des mélanges de caoutchoucs vulcanisables selon l'une des revendications 1 à 3.

**5.** Pièces mises en forme en caoutchouc obtenues par vulcanisation des mélanges de caoutchoucs vulcanisables selon l'une des revendications 1 à 3.

**6.** Pièces mises en forme en caoutchouc selon la revendication 5 pour lesquelles il s'agit de pneumatiques, de tuyaux, d'éléments d'amortissement, de garnitures d'étanchéité et de profilés.

**7.** Utilisation des masses de caoutchoucs vulcanisables selon l'une des revendications 1 à 3 pour la production de pièces mises en forme en caoutchouc, en particulier pour la production de pneumatiques, de tuyaux, d'éléments d'amortissement, de garnitures d'étanchéité et de profilés.

**8.** Procédé de production de pièces mises en forme en caoutchouc par vulcanisation des mélanges de caoutchoucs vulcanisables selon l'une des revendication 1 à 3.

**9.** Utilisation de b) polysulfures d'acide O,O-bis-(alkyl)dithiophosphorique de formule

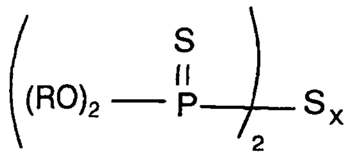

où
x représente 2, 3, 4 et 5 et
R représente un groupement $C_8$-$C_{12}$-alkyle ou -cycloalkyle,
et

c) d'amines primaires et/ou secondaires de formule

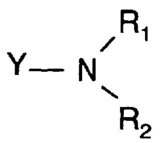

où

Y représente l'hydrogène ou un groupement mercaptobenzothiazole,
$R_1$ représente l'hydrogène, $C_1$-$C_6$-alkyle, $C_5$ et $C_6$-cycloalkyle ainsi que $C_7$-$C_{12}$-aralkyle et
$R_2$ possède la signification de $R_1$, avec la condition que $R_1$ et $R_2$ ne représentent pas simultanément l'hydrogène,
pour augmenter la densité de réticulation par rapport à la seule utilisation des composants b) et c) lors de la vulcanisation de mélanges de caoutchoucs vulcanisables qui contiennent a) des caoutchoucs et d) 0,5 à 3,0 % en masse de soufre, par rapport au caoutchouc,
où les composants b) et c) sont présents dans le rapport molaire mutuel de 0,5 à 1,5:1 et sont disponibles dans les mélanges de caoutchoucs vulcanisables au total en des quantités de 1 à 10 parties en masse pour 100 parties en masse de caoutchoucs.